# DEMANDE DE BREVET EUROPEEN

(11) **EP 4 600 111 A1**
(43) Date de publication de la demande: **13.08.2025**
(21) Numéro de dépôt: 25156488.6
(22) Date de dépôt: 07.02.2025
(51) Int. Cl.: B61L 23/04, G01N 29/04, E01B 3/28, E01B 35/00

(54) **PROCÉDÉ ET SYSTÈME DE DIAGNOSTIC STRUCTUREL DE TRAVERSES FERROVIAIRES EN BÉTON**

(30) Priorité: 09.02.2024 FR 2401275
(71) Demandeur: Sol Solution, 63200 Riom (FR)
(72) Inventeur: BARBIER, Sébastien, 63200 Riom (FR)
(74) Mandataire: Lavoix

(57) **Abrégé**

Ce procédé de diagnostic structurel comprend quatre étapes, à savoir une étape d'application, dans laquelle une sollicitation mécanique est appliquée par impact à une traverse ferroviaire en béton (2, 3) à diagnostiquer, une étape de détection, dans laquelle une vibration engendrée par la sollicitation mécanique et se propageant dans la traverse diagnostiquée est détectée en surface de la traverse diagnostiquée et est transformée en un signal temporel vibratoire, une étape de traitement, dans laquelle le signal temporel vibratoire est traité électroniquement de manière à en obtenir un spectre fréquentiel, et une étape d'analyse, dans laquelle le spectre fréquentiel est comparé à une référence pour en déduire une caractérisation d'endommagement structurel de la traverse diagnostiquée.

## Description

La présente invention concerne un procédé et un système de diagnostic structurel de traverses ferroviaires en béton.

Les traverses ferroviaires sont des pièces posées en travers d'une voie ferrée, sur lesquelles sont fixés les rails de manière à maintenir l'écartement et l'inclinaison de ces derniers, et qui transmettent les charges se déplaçant sur les rails à un ballast sur lequel reposent les traverses ferroviaires. On s'intéresse ici plus spécifiquement aux traverses dites « en béton », ces traverses pouvant aussi bien être monoblocs, en étant alors constituées d'une unique pièce en béton s'étendant sur toute la dimension longitudinale de la traverse, que bi-blocs, en étant alors constituée de deux blochets terminaux en béton, reliés l'un à un l'autre par une entretoise centrale métallique.

Les traverses ferroviaires en béton ont une durée de vie a priori importante, qui peut atteindre plusieurs dizaines d'années. Toutefois, dans certaines circonstances, ces traverses ferroviaires présentent un endommagement structurel qui est plus marqué que leur usure normale escomptée. Les causes ou raisons de cette situation sont diverses et induisent des conséquences structurelles toutes aussi variées : sans que cela ne soit exhaustif, on peut citer l'érosion de contact entre la sous-face de la traverse et le ballast, les épaufrures et dommages similaires liés au transport et/ou aux opérations de maintenance, les fissurations de surcontrainte en service, les fissurations chimiques suite à des réactions alcali-granulat, les fissurations de retrait thermique lors de la fabrication des traverses, etc. Dans tous les cas, il est difficile d'apprécier de manière non destructive l'endommagement structurel des traverses, typiquement par une simple observation visuelle in situ, c'est-à-dire directement sur voie ferrée : en effet, les conditions d'observation sont souvent médiocres et une grande partie des traverses est masquée par le ballast ou sous les rails, sauf à retirer la traverse de la voie ferrée et, le cas échéant, l'examiner ultérieurement en laboratoire de test, ce qui est particulièrement fastidieux. De plus, quand bien même des fissures sont observables en surface des traverses, il est quasiment impossible d'en déduire de manière fiable si l'endommagement structurel correspondant est critique pour la traverse, au point de nécessiter son remplacement en urgence. Plus généralement, il existe un réel besoin de pouvoir diagnostiquer structurellement les traverses ferroviaires en béton in situ, afin d'en gérer efficacement la maintenance au sens large.

Les documents WO 2018/134506 A1 et US 2017/219471 A1 mentionnent un procédé de diagnostic structurel de traverses ferroviaires en béton, basé sur une sollicitation mécanique de la traverse ferroviaire et la détection des vibrations engendrées par cette sollicitation. Le document US 2017/219471 A1 divulgue une analyse du temps de trajet des vibrations dans la traverse. Le document WO 2018/134506 A1 divulgue une analyse de la fréquence propre du spectre fréquentiel issu du signal vibratoire détecté, par rapport à des valeurs de référence d'endommagement de la traverse.

Cependant, il existe toujours un besoin d'amélioration, notamment de la fiabilité de l'analyse, de la simplicité d'acquisition du diagnostic par l'opérateur, et de la facilité de mise en oeuvre de l'invention.

Le but de la présente invention est de proposer un procédé et un système, qui permettent de diagnostiquer structurellement les traverses ferroviaires en béton de manière fiable, rapide et simple, le cas échéant directement sur voie ferrée.

À cet effet, l'invention a pour objet un procédé de diagnostic structurel de traverses ferroviaires en béton, comprenant :
- une étape d'application, dans laquelle une sollicitation mécanique est appliquée par impact à une traverse ferroviaire en béton à diagnostiquer,
- une étape de détection, dans laquelle une vibration engendrée par la sollicitation mécanique et se propageant dans la traverse diagnostiquée est détectée en surface de la traverse diagnostiquée et est transformée en un signal temporel vibratoire,
- une étape de traitement, dans laquelle le signal temporel vibratoire est traité électroniquement de manière à en obtenir un spectre fréquentiel, et
- une étape d'analyse, dans laquelle le spectre fréquentiel est comparé à une référence pour en déduire une caractérisation d'endommagement structurel de la traverse diagnostiquée,
caractérisé en ce que, dans l'étape d'analyse, (i) le spectre fréquentiel est comparé informatiquement à un spectre de référence constituant ladite référence, en calculant un score de distance qui est représentatif d'une distance mathématique entre le spectre fréquentiel et le spectre de référence, et (ii) la caractérisation d'endommagement structurel est déterminée à partir du score de distance calculé.

L'invention a également pour objet un système de diagnostic structurel de traverses ferroviaires en béton, comportant :
- au moins un impacteur adapté pour appliquer par impact une sollicitation mécanique à une traverse ferroviaire en béton à diagnostiquer,
- au moins un capteur adapté à la fois pour détecter, en surface de la traverse diagnostiquée, une vibration engendrée par la sollicitation mécanique et se propageant dans la traverse diagnostiquée, et pour transformer la vibration en un signal temporel vibratoire,

- une unité électronique de traitement, adaptée pour traiter le signal temporel vibratoire de manière à en obtenir un spectre fréquentiel, et
- des moyens d'analyse, adaptés pour comparer le spectre fréquentiel à une référence pour en déduire une caractérisation d'endommagement structurel de la traverse diagnostiquée,
caractérisé en ce que les moyens d'analyse sont configurés pour mettre en oeuvre une étape d'analyse, dans laquelle (i) le spectre fréquentiel est comparé informatiquement à un spectre de référence constituant une référence, en calculant un score de distance qui est représentatif d'une distance mathématique entre le spectre fréquentiel et le spectre de référence, et (ii) la caractérisation d'endommagement structurel est déterminée à partir du score de distance calculé.

Une des idées à la base de l'invention est de chercher à donner une caractérisation d'endommagement structurel d'une traverse ferroviaire en béton, à partir d'un simple impact non destructif, appliqué à la traverse à diagnostiquer, notamment in situ, c'est-à-dire directement sur la voie ferrée où la traverse est utilisée, ce qui est particulièrement simple et pratique à mettre en oeuvre. La caractérisation d'endommagement structurel est adimensionnelle, dans le sens où elle ne quantifie pas une dimension géométrique ou un paramètre dimensionnel de la traverse diagnostiquée, mais cette caractérisation d'endommagement structurel associe à la traverse diagnostiquée un état structurel parmi plusieurs états. Ainsi, la caractérisation d'endommagement structurel renseigne avantageusement sur, avec une marge d'erreur maitrisée, (i) la présence d'au moins un défaut structurel relevant d'un ou plusieurs types de défaut donnés et/ou (ii) une usure structurelle différente, et donc potentiellement plus forte, d'une usure structurelle nominale. Pour ce faire, l'invention prévoit que la vibration engendrée dans la traverse par l'impact précité est détectée en surface de la traverse et transformée en un signal temporel vibratoire, en pratique par l'intermédiaire d'un ou plusieurs capteurs ad hoc. Ce signal est alors traité, en particulier par une unité électronique de traitement ad hoc, pour passer du domaine temporel à un domaine fréquentiel, sous forme d'un spectre fréquentiel, avantageusement fourni in situ. L'analyse du spectre fréquentiel permet ensuite de déterminer la caractérisation d'endommagement structurel de la traverse diagnostiquée, par comparaison à une référence prédéterminée qui est par exemple obtenue à partir d'une traverse de référence, typiquement neuve ou considérée saine, ou à partir du traitement statistique préalable d'une population homogène de traverses. Cette analyse du spectre fréquentiel peut être soit opérée partiellement par un opérateur humain, notamment à qui on affiche sur écran, avantageusement in situ, le spectre fréquentiel et la référence précitée, soit opérée intégralement par des moyens informatiques ad hoc, le cas échéant partiellement distants, comme expliqué en détail par la suite. Dans tous les cas, les moyens d'analyse correspondants sont particulièrement pratiques et permettent de maitriser la fiabilité du diagnostic fourni, c'est-à-dire de la caractérisation d'endommagement structurel qui est déduite par ou grâce à ces moyens d'analyse.

Suivant des caractéristiques optionnelles avantageuses du procédé et/ou du système de diagnostic structurel conformes à l'invention, prises isolément ou selon toutes les combinaisons techniquement possibles :
- l'étape d'application, l'étape de détection et l'étape de traitement, ainsi qu'au moins une partie de l'étape d'analyse sont mises en oeuvre sur voie ferrée.
- dans l'étape d'analyse, (i) le spectre fréquentiel est comparé informatiquement à plusieurs spectres de référence constituant ladite référence, en calculant des scores de distance qui sont respectivement représentatifs de distances mathématiques entre le spectre fréquentiel et les spectres de référence, et (ii) la caractérisation d'endommagement structurel est déterminée à partir des scores de distance calculés.
- dans l'étape d'application, la sollicitation mécanique est appliquée à la traverse à diagnostiquer par un impact ayant une énergie inférieure à 3 joules, de préférence inférieure à 1 joule.
- dans l'étape de traitement, le signal temporel vibratoire est traité de manière à en extraire une partie significative, avant d'appliquer à cette partie significative un filtre passe-bande puis une transformation mathématique sur un domaine fréquentiel pour disposer du spectre fréquentiel.
- le filtre passe-bande présente une fréquence de coupure basse sensiblement égale à 3 000 Hz, de préférence 3 500 Hz, et une fréquence de coupure haute sensiblement égale à 20 000 HZ, de préférence 15 500 Hz.
- le ou les impacteurs, le ou les capteurs et l'unité électronique de traitement, ainsi qu'au moins une partie des moyens d'analyse forment un ensemble matériel portatif, utilisable par un opérateur humain sur voie ferrée.

L'invention sera mieux comprise à la lecture de la description qui va suivre, donnée uniquement à titre d'exemple et faite en se référant aux dessins sur lesquels :
- [Fig.1] la figure 1 est une vue schématique en perspective de deux traverses ferroviaires en béton et d'un système de diagnostic structurel de telles traverses ;
- [Fig.2] la figure 2 est un logigramme d'un procédé de diagnostic structurel, mis en oeuvre par le système de diagnostic structurel de la figure 1 ;
- [Fig.3] la figure 3 est une coupe schématique d'une partie du système de diagnostic structurel de la figure 1, utilisé sur une traverse, cette coupe étant associée schématiquement à des signaux produits par le système de diagnostic structurel ;
- [Fig.4] la figure 4 inclut des inserts a) et b) correspondant respectivement à des schémas de spectres fréquentiels mis en oeuvre dans le procédé de diagnostic structurel, ainsi qu'un insert c) correspondant à un schéma d'un score de distance, également mis en oeuvre dans le procédé de diagnostic structurel ; et
- [Fig.5] la figure 5 inclut deux inserts a) et b) qui correspondent respectivement à des schémas incluant un espace de représentation, mis en oeuvre dans le procédé de diagnostic structurel.

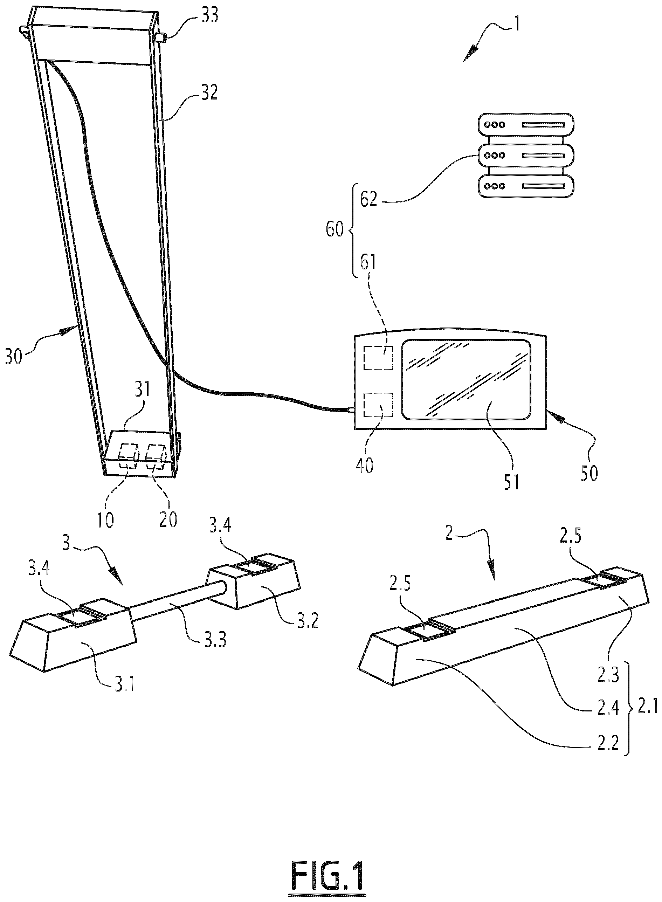

Sur la figure 1 est représenté un système de diagnostic structurel 1 permettant de contrôler de manière non destructive la structure béton de traverses ferroviaires en béton, telles que des traverses 2 et 3 montrées à la figure 1 à titre d'exemples.

La traverse 2 est une traverse dite monobloc et comprend un corps en béton 2.1 s'étendant de manière continue de l'une à l'autre de deux extrémités de la traverse 2, opposées l'une à l'autre suivant une direction longitudinale de la traverse 2. Le corps en béton 2.1 inclut deux parties terminales 2.2 et 2.3, qui sont opposées l'une à l'autre suivant la direction longitudinale de la traverse 2, ainsi qu'une partie intermédiaire 2.4, qui relie l'une à l'autre les parties terminales 2.2 et 2.3 et qui est possiblement amincie par rapport aux parties terminales 2.2 et 2.3. La traverse 2 est pourvue, sur chacune de ses parties terminales 2.2 et 2.3, d'aménagements 2.5 dédiés à la fixation d'un rail ferroviaire, non représenté sur les figures. La traverse 2 comporte optionnellement une armature de fils métalliques, noyés dans le corps en béton 2.1.

La traverse 3 est une traverse dite bi-bloc et comprend deux blochets en béton 3.1 et 3.2, qui forment deux parties terminales de la traverse 3, opposées l'une à l'autre suivant une direction longitudinale de la traverse 3, et qui sont reliés l'un à l'autre par une entretoise 3.3 métallique. De manière similaire à la traverse 2, la traverse 3 est pourvue, sur chacun de ses blochets en béton 3.1 et 3.2, d'aménagements 3.4 dédiés à la fixation d'un rail ferroviaire.

Les spécificités de la traverse 2 et de la traverse 3 ne sont pas limitatives dès lors leur structure est principalement, mais non nécessairement exclusivement, réalisée en béton, à l'image du corps en béton 2.1 pour la traverse 2 et des blochets en béton 3.1 et 3.2 pour la traverse 3. Ainsi, le béton de ces traverses 2 et 3 est par exemple armé, précontraint ou post-contraint.

Dans tous les cas, de manière usuelle dans le domaine et sans que cela ne soit représenté sur la figure 1, la traverse 2 et la traverse 3 sont indifféremment utilisées dans une voie ferrée qui comporte à la fois un support, typiquement un ballast, sur lequel repose un groupe de traverses, telles que les traverses 2 et 3, réparties de manière régulière suivant une direction longitudinale de la voie ferrée, et des rails, qui s'étendent en longueur suivant la direction longitudinale de la voie ferrée et qui sont fixés aux traverses, au niveau d'aménagements dédiés de ces dernières, tels que les aménagements 2.5 pour la traverse 2 et les aménagements 3.4 pour la traverse 3.

Quelles que soient les spécificités des traverses 2 et 3, leur structure en béton évolue nécessairement dans le temps, en subissant un endommagement structurel. Cet endommagement structurel résulte de l'usure, que l'on peut qualifier de normale, des traverses 2 et 3, liée notamment aux contraintes que les traverses transmettent entre le ballast et des matériels ferroviaires roulant sur les rails de la voie ferrée. Comme évoqué dans la partie introductive du présent document, dans certaines conditions d'utilisation et/ou du fait de certaines conditions de fabrication des traverses 2 et 3, l'endommagement structurel de ces traverses est susceptible d'être plus important que l'usure normale. En particulier, des fissures ou d'autres défauts structurels sont susceptibles d'apparaitre et de dégrader substantiellement et rapidement l'endommagement structurel. Dès lors que de tels défauts structurels apparaissent dans la structure béton des traverses 2 et 3, la durée de vie de ces traverses risque d'être moindre que celle des mêmes traverses mais exemptent de tels défauts structurels.

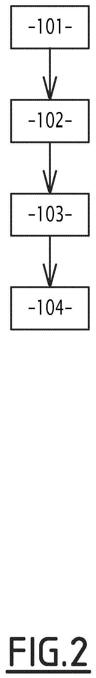

Afin de caractériser l'endommagement structurel effectif de traverses ferroviaires en béton, telles que les traverses 2 et 3, alors que ces traverses sont utilisées dans une voie ferrée, on propose de mettre en oeuvre un procédé de diagnostic structurel, qui va être décrit en détail ci-dessous. Dans ce qui suit, ce procédé de diagnostic structurel est appliqué par exemple à la traverse 2 mais on comprend que ce procédé de diagnostic structurel est tout aussi applicable à la traverse 3. Un mode de réalisation de ce procédé de diagnostic structurel est illustré schématiquement à la figure 2 et est avantageusement mis en oeuvre par le système de diagnostic structurel 1, commandé de manière appropriée par un opérateur humain.

Comme illustré à la figure 2, le procédé de diagnostic structurel comporte quatre étapes principales qui se succèdent, à savoir une étape d'application 101, une étape de détection 102, une étape de traitement 103 et une étape d'analyse 104. Avant de décrire en détail successivement chacune de ces quatre étapes, on notera que l'étape d'application 101, l'étape de détection 102 et l'étape de traitement 103, ainsi qu'au moins une partie de l'étape d'analyse 104 sont avantageusement mises en oeuvre in situ, c'est-à-dire directement sur voie ferrée, en particulier alors que les traverses en béton de cette dernière sont laissées en l'état, autrement dit maintenues en situation opérationnelle au sein de la voie ferrée.

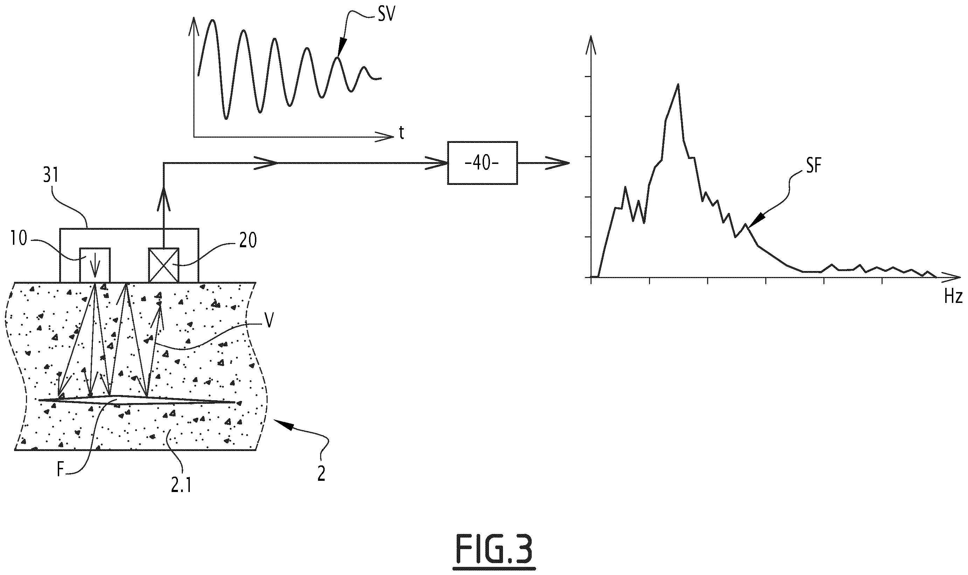

Dans l'étape d'application 101, une sollicitation mécanique est appliquée par impact à une traverse ferroviaire en béton à diagnostiquer, ici la traverse 2, de manière à, comme illustré schématiquement sur la figure 3, engendrer une vibration V dans la traverse 2, plus précisément dans la structure béton de cette dernière, ici le corps en béton 2.1. Une fois engendrée par la sollicitation mécanique d'impact, la vibration V se propage dans la traverse 2, en particulier à travers la structure béton de cette dernière, ici le corps en béton 2.1, tout en étant réfléchie par les surfaces externes de la traverse 2, ainsi que par des défauts internes ou, plus généralement, des hétérogénéités structurelles internes, telles que des fissures, comme celle illustrée à la figure 3 sous la référence F, mais également telles que des vides, des interfaces de ségrégation, etc.

En pratique, l'impact qui sollicite mécaniquement la traverse 2 pour y générer la vibration V lors de l'étape d'application 101 est de suffisamment faible intensité pour ne pas endommager la traverse 2, ni même déplacer cette dernière par rapport au support sur laquelle la traverse repose, typiquement le ballast lorsque l'étape d'application 101 est mise en oeuvre sur voie ferrée. De plus, l'intensité de cet impact est dimensionnée pour que la vibration V en résultant dans la structure béton de la traverse 2 présente une longueur d'onde appropriée à l'endommagement structurel que le procédé de diagnostic structurel vise à caractériser. A cet effet, cet impact présente une énergie avantageusement inférieure à 3 joules, de préférence inférieure à 1 joule.

Aux fins de la mise en oeuvre de l'étape d'application 101, le système de diagnostic structurel 1 comporte un impacteur 10 qui est visible de manière schématique sur les figures 1 et 3. L'impacteur 10 est adapté pour appliquer par impact la sollicitation mécanique précitée à une traverse à diagnostiquer, ici à la traverse 2. A titre d'exemple non-limitatif, l'impacteur 10 comporte un électroaimant qui commande en déplacement une masselotte d'impact. Bien entendu, d'autres formes de réalisation sont envisageables pour l'impacteur 10 du moment qu'il permet de solliciter mécaniquement par impact la traverse 2 pour engendrer dans cette dernière la vibration V.

Dans l'étape de détection 102, la vibration V est détectée en surface de la traverse diagnostiquée, ici la traverse 2, et est transformée en un signal temporel vibratoire, comme illustré schématiquement à la figure 3 sur laquelle ce signal temporel vibratoire est référencé SV. Le signal temporel vibratoire SV est ainsi représentatif de l'évolution, dans le temps, de mouvements de surface du corps en béton 2.1, induits par la vibration V.

Aux fins de la mise en oeuvre de l'étape de détection 102, le système de diagnostic structurel 1 comporte un capteur 20 montré schématiquement sur les figures 1 et 3. Le capteur 20 est adapté pour détecter la vibration V et pour transformer cette dernière en le signal temporel vibratoire SV. A titre d'exemple non limitatif, le capteur 20 comporte un microphone de contact, à transducteur piézoélectrique. Bien entendu, d'autres formes de réalisation sont envisageables pour le capteur 20 du moment que ce dernier émette un signal temporel vibratoire, tel que le signal SV, obtenu par détection et transformation de la vibration V par ce capteur.

Dans la forme de réalisation envisagée aux figures, l'impacteur 10 et le capteur 20 sont avantageusement intégrés dans un outil portatif 30 du système de diagnostic structurel 1. Cet outil portatif 30 est commandable à la main par l'opérateur utilisant le système de diagnostic structurel 1, notamment in situ. Cet outil portatif 30 comporte par exemple un boitier 31, dans lequel sont agencés l'impacteur 10 et le capteur 20 et qui est à même d'être appliqué contre la traverse 2 de manière à mettre en contact avec cette dernière l'impacteur 10 et le capteur 20, comme illustré schématiquement sur la figure 3. L'outil portatif 30 comporte ici également une poignée 32, qui s'étend depuis le boitier 31 et qui permet à l'opérateur de commander et manipuler l'outil portatif 30 de manière pratique. En particulier, la poignée 32 est pourvue d'un déclencheur manuel 33 dont l'actionnement par l'opérateur commande l'impacteur 10. En pratique, la forme et les dimensions de la poignée 32 ne sont pas limitatives.

Dans l'étape de traitement 103, le signal temporel vibratoire SV est traité électroniquement de manière à en obtenir un spectre fréquentiel, illustré schématiquement à la figure 3 sous la référence SF. Le spectre fréquentiel SF est ainsi représentatif d'une amplitude spectrale en fonction de la fréquence, typiquement quantifiée en hertz, de symbole Hz. Suivant un mode de réalisation efficace et performant, lors de l'étape de traitement 103, le signal temporel vibratoire SV est, au moins en partie, transformé mathématiquement sur un domaine fréquentiel pour disposer du spectre fréquentiel SF : la transformation mathématique correspondante est par exemple une transformation de Fourier, notamment une transformation de Fourier rapide. De plus, ce qui est soumis à la transformation mathématique précitée n'est avantageusement qu'une partie du signal temporel vibratoire SV, à savoir une partie filtrée, qui est obtenue par application d'un filtre passe-bande au signal vibratoire temporel, en particulier à seulement une partie significative de ce signal, extraite du signal temporel vibratoire en utilisant par exemple une valeur seuil appliquée à l'amplitude de ce signal. Suivant un dimensionnement préférentiel qui aboutit à des performances remarquables pour le procédé de diagnostic structurel, le filtre passe-bande précité présente une fréquence de coupure basse égale à 3 000 Hz, de préférence 3 500 Hz, et une fréquence de coupure haute égale à 20 000 Hz, de préférence 15 500 Hz.

En pratique, on notera que les valeurs absolues de l'amplitude du spectre fréquentiel SF, obtenues à l'issue de l'étape de traitement 103, ne sont pas d'intérêt pour le procédé de diagnostic structurel, dans le sens où ces valeurs absolues n'ont pas vocation à être exploitées dans ce procédé. En revanche, la variation de cette amplitude du spectre fréquentiel SF en fonction de la fréquence est d'intérêt, notamment pour y identifier un ou des pics, comme ré-évoqué par la suite.

Aux fins de la mise en oeuvre de l'étape de traitement 103, le système de diagnostic structurel 1 comporte une unité électronique de traitement 40 qui est montrée de manière schématique sur les figures 1 et 3. L'unité électronique de traitement 40 est adaptée pour traiter le signal temporel vibratoire SV de manière à en obtenir le spectre fréquentiel SF. L'unité électronique de traitement 40 est avantageusement adaptée pour successivement extraire une partie significative du signal temporel vibratoire SV et appliquer le filtre passe-bande précité, puis la transformation mathématique précitée. Dans tous les cas, la forme de réalisation de l'unité électronique de traitement 40 n'est pas limitative. En pratique, l'unité électronique de traitement 40 peut aussi bien comprendre un assemblage de composants électroniques analogiques, dédié aux opérations de traitement mises en oeuvre par cette unité électronique de traitement 40, que comprendre un ensemble d'électronique numérique, incluant typiquement un microprocesseur ou similaire, programmé pour mettre en oeuvre les opérations de traitement précitées.

Dans la forme de réalisation envisagée aux figures, l'unité électronique de traitement 40 est avantageusement intégrée dans un équipement informatique portable 50, tel qu'une tablette ou un ordinateur portable ou encore un terminal spécifique. L'intérêt de cet équipement informatique portable 50 apparaitra un peu plus loin.

Dans l'étape d'analyse 104, le spectre fréquentiel SF est comparé à une référence pour en déduire une caractérisation d'endommagement structurel de la traverse diagnostiquée, ici la traverse 2. Divers modes de réalisation sont envisageables pour cette étape d'analyse 104, notamment selon la nature de la référence précitée, ainsi que selon la façon dont le spectre fréquentiel SF est comparé à cette référence. Avant d'expliquer plus en détail cet aspect du procédé de diagnostic structurel, on notera que, aux fins de la mise en oeuvre de l'étape d'analyse 104, le système de diagnostic structurel 1 comporte des moyens d'analyse 60 illustrés schématiquement sur la figure 1. Ces moyens d'analyse 60 sont adaptés pour déterminer la caractérisation d'endommagement structurel de la traverse diagnostiquée, en comparant à la référence précitée le spectre fréquentiel SF fourni aux moyens d'analyse 60 par l'unité de traitement 40. Diverses formes de réalisation pour les moyens d'analyse 60 seront décrites plus en détail par la suite, en étant associées aux différents modes de réalisation de l'étape d'analyse 104, expliqués plus loin. Ceci étant, dans tous les cas, au moins une partie des moyens d'analyse 60 est avantageusement informatique, en étant à même de traiter le spectre fréquentiel SF fourni par l'unité électronique de traitement 40. En particulier, cette partie informatique des moyens d'analyse 60 inclut :
- une unité de traitement informatique 61, qui est intégrée à l'équipement informatique portable 50 et qui, le cas échéant, partage tout ou partie de l'ensemble d'électronique numérique de l'unité électronique de traitement 40, et/ou
- un équipement informatique distant 62, tel qu'un ordinateur ou un serveur, qui est à même de lire un support de données transportable depuis l'équipement informatique portable 50 ou qui est en communication sans fil avec cet équipement informatique portable 50.

Dans la forme de réalisation envisagée à la figure 1, l'impacteur 10, le capteur 20 et l'unité électronique de traitement 40, ainsi que l'unité de traitement informatique 61 des moyens d'analyse 60 forment un ensemble matériel portatif, qui est utilisable par un opérateur sur voie ferrée et qui, ici, réunit l'outil portatif 30 et l'équipement informatique portable 50.

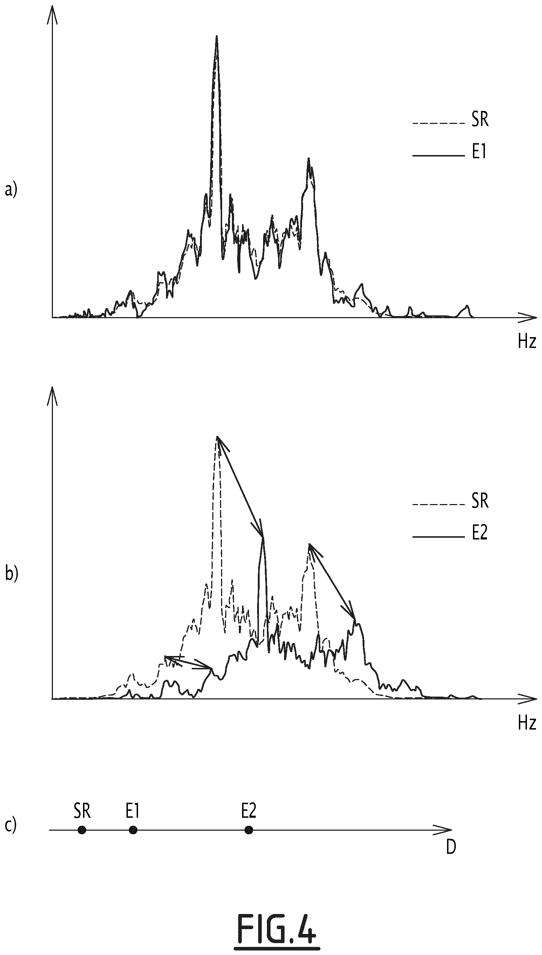

Un premier mode de réalisation de l'étape d'analyse 104 est illustré par chacun des inserts a) et b) de la figure 4. Dans ce premier mode de réalisation, la référence utilisée dans l'étape d'analyse 104 est constituée d'un spectre de référence SR prédéterminé, qui est représenté en pointillés sur les inserts a) et b) de la figure 4 et qui est par exemple stocké dans une mémoire ad hoc des moyens d'analyse 60. En pratique, ce spectre de référence SR est par exemple acquis soit par une mise en oeuvre préalable des étapes d'application 101, de détection 102 et de traitement 103 sur une traverse de référence, typiquement une traverse dont on sait que l'endommagement structurel correspond à une usure normale, soit par un traitement statistique préalable de résultats obtenus par mise en oeuvre des étapes d'application 101, de détection 102 et de traitement 103 sur une population considérée homogène de traverses.

De plus, dans le premier mode de réalisation de l'étape d'analyse 104, le spectre de référence SR et le spectre fréquentiel SF, tel qu'issu des étapes d'application 101, de détection 102 et de traitement 103 appliquées à une traverse à diagnostiquer, telle que la traverse 2, sont affichés, typiquement sur un écran des moyens d'analyse 60, ici un écran 51 intégré à l'équipement informatique portable 50, afin que, par observation visuelle directe, l'opérateur apprécie la comparaison entre le spectre de référence SR et le spectre fréquentiel SF et en déduise la caractéristique d'endommagement structurel pour la traverse diagnostiquée. Ainsi, cette déduction est opérée par l'opérateur in situ, c'est-à-dire directement sur voie ferrée. En pratique, les affichages respectifs du spectre de référence SR et du spectre fréquentiel SF sur l'écran 51 sont avantageusement simultanés et superposés : à titre d'illustrations schématiques correspondantes, le spectre fréquentiel associé à une première traverse à diagnostiquer est représenté en traits pleins sur l'insert a) de la figure 4, en y étant légendé E1, et le spectre fréquentiel associé à une seconde traverse à diagnostiquer est représenté en traits pleins sur l'insert b) de la figure 4, en y étant légendé E2, tandis que sur ces deux inserts, le spectre de référence SR est représenté en pointillés.

En pratique, la caractérisation d'endommagement structurel est par exemple de déterminer, par l'opérateur, que l'endommagement structurel de la traverse diagnostiquée est soit normal, c'est-à-dire similaire à celui de la traverse de référence, comme dans le cas illustré à l'insert a) de la figure 4, soit anormal, c'est-à-dire substantiellement différent de celui de la traverse de référence, comme dans le cas illustré à l'insert b) de la figure 4. Sur voie ferrée, l'opérateur peut ainsi déterminer rapidement, parmi toutes les traverses d'une voie ferrée, celles dont l'endommagement structurel est anormal.

Un deuxième mode de réalisation de l'étape d'analyse 104 est illustré par les inserts a), b) et c) de la figure 4.

Là encore, la référence utilisée dans l'étape d'analyse 104 est constituée d'un spectre de référence, ici le spectre de référence SR décrit plus haut pour le premier mode de réalisation.

De plus, dans ce second mode de réalisation, le spectre fréquentiel SF, tel qu'issu des étapes d'application 101, de détection 102 et de traitement 103, est comparé informatiquement au spectre de référence SR, en calculant un score de distance qui est représentatif d'une distance mathématique entre le spectre de référence SR et le spectre fréquentiel SF. Les spécificités du calcul de ce score de distance ne sont pas limitatives, étant souligné que diverses formules de calcul sont connues dans la technique, telles que les formules dites DTW qui est l'acronyme de l'expression anglaise dans « Dynamic Time Warping », les formules dites DTW s'appuyant sur l'écart entre des pics respectifs du spectre de référence et du spectre fréquentiel analysés, comme illustré schématiquement par les flèches à double pointe, dessinées schématiquement sur l'insert b) de la figure 4.

Dans tous les cas, pour chaque traverse diagnostiquée, on calcule un score de distance associé puis on détermine la caractéristique d'endommagement structurel à partir de ce score de distance calculé. À titre d'illustration schématique, des scores de distance calculés respectivement pour le spectre fréquentiel légendé E1 sur l'insert a) de la figure 4 et pour le spectre fréquentiel légendé E2 sur l'insert b) de la figure 4 sont, sur l'insert c) de la figure 4, reportés sur un axe de score de distance D dont l'origine zéro correspond au score de distance, nécessairement nul, pour le spectre de référence SR. On comprend qu'il ainsi possible d'apprécier dans quelle mesure l'endommagement structurel d'une traverse diagnostiquée est plus ou moins éloigné de l'endommagement structurel de la traverse de référence et donc, par exemple, de classifier en deux ou davantage de catégories les traverses diagnostiquées le long d'une voie ferrée.

En pratique, le calcul du score de distance de chaque traverse diagnostiquée est avantageusement réalisé par un programme informatique ad hoc de la partie informatique des moyens d'analyse 60. Cela revient à dire que les moyens d'analyse 60 sont configurés pour comparer informatiquement le spectre fréquentiel de la traverse diagnostiquée à un spectre de référence, en calculant un score de distance correspondant, et pour déterminer la caractérisation d'endommagement structurel pour la traverse diagnostiquée à partir du score de distance calculé, étant remarqué que cette détermination peut aussi bien être réalisée informatiquement et/ou par un opérateur humain.

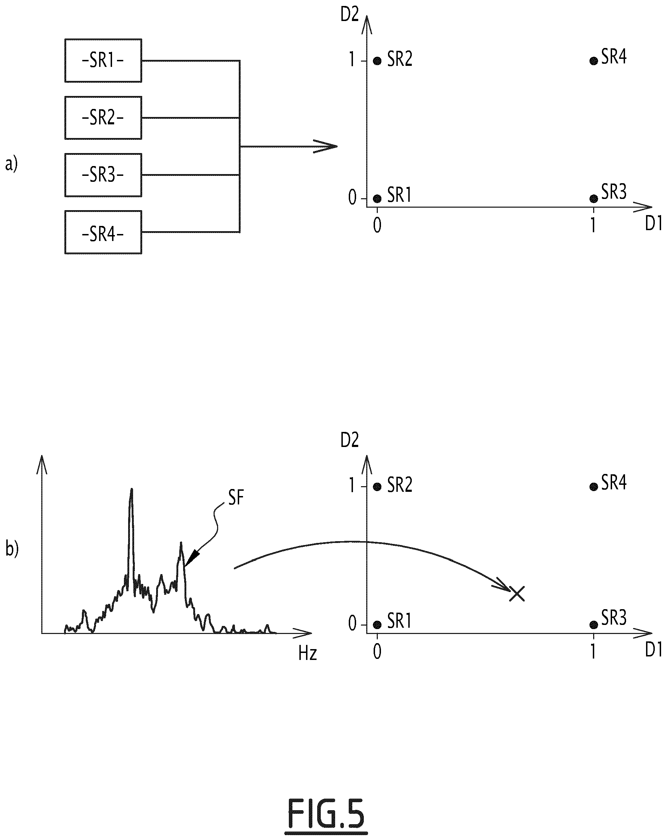

Un troisième mode de réalisation de l'étape d'analyse 104 est illustré par les inserts a) et b) de la figure 5.

Dans ce troisième mode de réalisation, la référence utilisée à l'étape d'analyse 104 est constituée de plusieurs spectres de référence, qui sont individuellement similaires au spectre de référence SR décrit plus haut dans les premier et deuxième modes de réalisation, mais qui se distinguent les uns des autres en correspondant à des spectres fréquentiels respectivement représentatifs d'états d'endommagement structurel prédéterminés, qui sont différents les uns des autres. À titre d'illustration schématique, sur l'insert a) de la figure 5, quatre états d'endommagement structurel, respectivement différents les uns des autres, sont considérés, en étant respectivement associés à des spectres de référence légendés SR1, SR2, SR3 et SR4. Bien entendu, le nombre de spectres de référence, ici égal à quatre, n'est qu'un exemple non limitatif. Ces quatre spectres de référence sont ici illustrés dans un espace de représentation qui est ici bidimensionnel, en étant défini par deux axes orthonormés, à savoir un premier axe de score de distance D1 et un second axe de score de distance D2, dont les calculs de score de distance respectifs sont différents l'un de l'autre. Ainsi, on comprend que, ici, l'espace de représentation est réduit suivant deux axes principaux de variation. Plus généralement, et comme ré-évoqué un peu plus loin, on comprend, à travers cet exemple, qu'il est envisageable de recourir à d'autres techniques de réduction de dimensions, que celle illustrée à la figure 5, et ce, le cas échéant, en prévoyant un nombre de dimensions différent de deux comme dans l'exemple illustré à la figure 5.

De plus, dans le troisième mode de réalisation de l'étape d'analyse 104, on calcule, pour chaque traverse diagnostiquée, les scores de distance associés à la traverse diagnostiquée respectivement selon les axes de score de distance D1 et D2, ce qui permet d'apprécier la « position » de la traverse diagnostiquée dans l'espace de représentation précité, comme illustré schématiquement sur l'insert b) de la figure 5. À partir de cette « position », une caractérisation d'endommagement structurel pour la traverse diagnostiquée est déterminable, par exemple en classifiant les traverses diagnostiquées le long d'une voie ferrée en diverses catégories selon les « positions » respectives de ces traverses dans l'espace de représentation.

Là encore, en pratique, le calcul du score de distance de chaque traverse diagnostiquée est avantageusement réalisé par un programme informatique ad hoc de la partie informatique des moyens d'analyse 60. Cela revient à dire que les moyens d'analyse 60 sont configurés pour comparer informatiquement le spectre fréquentiel de chaque traverse diagnostiquée à plusieurs spectres de référence, en calculant un score de distance correspondant, et pour déterminer, notamment informatiquement, la caractérisation d'endommagement structurel pour la traverse diagnostiquée à partir du score de distance calculé.

D'autres modes de réalisation de l'étape d'analyse 104. À titre d'exemples non exhaustifs :
- découpage en groupes des mesures réalisées afin de définir des groupes de ressemblance par rapport à la distance entre les spectres fréquentiels, en utilisant des techniques de Machine Learning telles que le partitionnement en k-moyennes ; et/ou
- représentation de la position des mesures suivant des axes réduits en utilisant des techniques de réduction de dimension non linéaires, afin d'évaluer les positionnements des mesures les unes par rapport aux autres dans une représentation à dimensions réduites et plus facilement interprétables, telle qu'une représentation monodimensionnelle, bidimensionnelle ou tridimensionnelle.

Quel que soit le mode de réalisation de l'étape d'analyse 104, on comprend que le procédé de diagnostic structurel aboutit à déterminer une caractérisation d'endommagement structurel pour chacune des traverses diagnostiquées. Cette caractérisation d'endommagement structurel associe à la traverse diagnostiquée un état structurel parmi plusieurs états, prédéterminés et/ou classifiés a posteriori. Ainsi, la caractérisation d'endommagement structurel renseigne, avec une marge d'erreur maitrisée, notamment sur :
- la présence d'au moins un défaut structurel relevant d'un ou plusieurs types de défaut donnés, tel que la fissure F évoquée plus haut, et/ou
- une usure structurelle plus marquée que l'usure structurelle nominale.

Egalement, quel que soit le mode de réalisation de l'étape d'analyse 104, la mise en oeuvre de cette étape d'analyse 104 fait potentiellement intervenir l'opérateur pour la déduction de cette caractérisation d'endommagement structurel, auquel cas les moyens d'analyse 60 fournissent à l'opérateur, par traitement informatique, les informations d'appréciation nécessaires, par exemple sous forme d'au moins un affichage comparatif, comme dans le premier mode de réalisation détaillé plus haut. Alternativement, la mise en oeuvre de l'étape d'analyse 104 est intégralement informatique, ce qui peut nécessiter des puissances de calcul importantes, notamment mises à disposition par l'équipement informatique distant 52.

Enfin, divers aménagements et variantes au procédé de diagnostic structurel, ainsi qu'au système de diagnostic structurel 1, décrits jusqu'ici, sont envisageables. À titre d'exemples :
- la vibration V est détectable et mesurable par plusieurs capteurs du système de diagnostic structurel, tels que le capteur 20, ces différents capteurs pouvant être répartis sur la traverse à diagnostiquer ;
- la vibration V peut être générée par plusieurs impacteurs du système de diagnostic structurel, tels que l'impacteur 10, en étant alors, le cas échéant, détectée par un seul capteur, tel que le capteur 20, ces différents impacteurs pouvant être répartis sur la traverse à diagnostiquer ; et/ou
- plutôt que toute l'étape d'analyse 104 soit mise en oeuvre in situ, c'est-à-dire sur voie ferrée, une partie de cette étape d'analyse 104 peut être mise en oeuvre à distance de la voie ferrée, par exemple en bureau.

## Revendications

1. Procédé de diagnostic structurel de traverses ferroviaires en béton (2, 3), comprenant :
- une étape d'application (101), dans laquelle une sollicitation mécanique est appliquée par impact à une traverse ferroviaire en béton (2, 3) à diagnostiquer,
- une étape de détection (102), dans laquelle une vibration (V) engendrée par la sollicitation mécanique et se propageant dans la traverse diagnostiquée est détectée en surface de la traverse diagnostiquée et est transformée en un signal temporel vibratoire (SV),
- une étape de traitement (103), dans laquelle le signal temporel vibratoire (SV) est traité électroniquement de manière à en obtenir un spectre fréquentiel (SF), et
- une étape d'analyse (104), dans laquelle le spectre fréquentiel (SF) est comparé à une référence (SR ; SR1, SR2, SR3, SR4) pour en déduire une caractérisation d'endommagement structurel de la traverse diagnostiquée,
**caractérisé en ce que**, dans l'étape d'analyse (104) :
- le spectre fréquentiel (SF) est comparé informatiquement à un spectre de référence (SR) constituant ladite référence, en calculant un score de distance qui est représentatif d'une distance mathématique entre le spectre fréquentiel et le spectre de référence, et
- la caractérisation d'endommagement structurel est déterminée à partir du score de distance calculé.

2. Procédé suivant la revendication 1, dans lequel l'étape d'application (101), l'étape de détection (102) et l'étape de traitement (103), ainsi qu'au moins une partie de l'étape d'analyse (104) sont mises en oeuvre sur voie ferrée.

3. Procédé suivant l'une quelconque des revendications précédentes, dans lequel, dans l'étape d'analyse (104) :
- le spectre fréquentiel (SF) est comparé informatiquement à plusieurs spectres de référence (SR1, SR2, SR3, SR4) constituant ladite référence, en calculant des scores de distance qui sont respectivement représentatifs de distances mathématiques entre le spectre fréquentiel et les spectres de référence, et
- la caractérisation d'endommagement structurel est déterminée à partir des scores de distance calculés.

4. Procédé suivant l'une quelconque des revendications précédentes, dans lequel, dans l'étape d'application (101), la sollicitation mécanique est appliquée à la traverse à diagnostiquer (2, 3) par un impact ayant une énergie inférieure à 3 joules, de préférence inférieure à 1 joule.

5. Procédé suivant l'une quelconque des revendications précédentes, dans lequel, dans l'étape de traitement (103), le signal temporel vibratoire (SV) est traité de manière à en extraire une partie significative, avant d'appliquer à cette partie significative un filtre passe-bande puis une transformation mathématique sur un domaine fréquentiel pour disposer du spectre fréquentiel (SF).

6. Procédé suivant la revendication 5, dans lequel le filtre passe-bande présente une fréquence de coupure basse sensiblement égale à 3 000 Hz, de préférence 3 500 Hz, et une fréquence de coupure haute sensiblement égale à 20 000 HZ, de préférence 15 500 Hz.

7. Système de diagnostic structurel (1) pour des traverses ferroviaires en béton (2, 3), comportant :
- au moins un impacteur (10) adapté pour appliquer par impact une sollicitation mécanique à une traverse ferroviaire en béton (2, 3) à diagnostiquer,
- au moins un capteur (20) adapté à la fois pour détecter, en surface de la traverse diagnostiquée, une vibration (V) engendrée par la sollicitation mécanique et se propageant dans la traverse diagnostiquée, et pour transformer la vibration (V) en un signal temporel vibratoire (SV),
- une unité électronique de traitement (40), adaptée pour traiter le signal temporel vibratoire (SV) de manière à en obtenir un spectre fréquentiel (SF), et
- des moyens d'analyse (60), adaptés pour comparer le spectre fréquentiel (SF) à une référence (SR ; SR1, SR2, SR3, SR4) pour en déduire une caractérisation d'endommagement structurel de la traverse diagnostiquée,
**caractérisé en ce que** les moyens d'analyse (60) sont configurés pour mettre en oeuvre une étape d'analyse (104) dans laquelle
- le spectre fréquentiel (SF) est comparé informatiquement à un spectre de référence (SR) constituant une référence, en calculant un score de distance qui est représentatif d'une distance mathématique entre le spectre fréquentiel et le spectre de référence, et
- la caractérisation d'endommagement structurel est déterminée à partir du score de distance calculé.

8. Système suivant la revendication 7, dans lequel le ou les impacteurs (10), le ou les capteurs (20) et l'unité électronique de traitement (40), ainsi qu'au moins une partie (61) des moyens d'analyse (60) forment un ensemble matériel portatif, utilisable par un opérateur humain sur voie ferrée.
